## Europäisches Patentamt

## European Patent Office

## Office européen des brevets

(19)

(11) Veröffentlichungsnummer: **0 243 836 B1**

(12) **EUROPÄISCHE PATENTSCHRIFT**

(45) Veröffentlichungstag der Patentschrift:
09.08.89

(21) Anmeldenummer: 87105768.3

(22) Anmeldetag: **18.04.87**

(51) Int. Cl.⁴: **G11B 5/71, G11B 5/708**

(54) **Magnetische Aufzeichnungsträger.**

(30) Priorität: 26.04.86 DE 3614149

(43) Veröffentlichungstag der Anmeldung:
04.11.87 Patentblatt 87/45

(45) Bekanntmachung des Hinweises auf die Patenterteilung:
09.08.89 Patentblatt 89/32

(84) Benannte Vertragsstaaten:
**DE FR GB NL**

(56) Entgegenhaltungen:
EP-A- 0 201 305
DE-A- 2 506 210
US-A- 4 303 738
US-A- 4 544 601

(73) Patentinhaber: **BASF Aktiengesellschaft,**
**Carl-Bosch-Strasse 38, D-6700 Ludwigshafen(DE)**

(72) Erfinder: **Melzer, Milena, Kirchenstrasse 116,**
**D-6700 Ludwigshafen(DE)**
Erfinder: **Meyer, Bernd, Dr., Weschnitzaeckerstrasse 8,**
**D-6942 Moerlenbach(DE)**
Erfinder: **Sommermann, Friedrich, Dr.,**
**Grimmelshausenstrasse 9, D-7640 Kehl(DE)**
Erfinder: **Klumpp, Peter, Ludwig-Huber-Strasse 18,**
**D-7601 Hohberg(DE)**
Erfinder: **Kreitner, Ludwig, Dr., Liebigstrasse 10,**
**D-6148 Heppenheim(DE)**
Erfinder: **Lenz, Werner, Dr.,**
**Heinrich-Baermann-Strasse 14, D-6702 Bad**
**Duerkheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft magnetische Aufzeichnungsträger, bestehend aus einem nichtmagnetischen Trägermaterial und mindestens einer darauf haftfest aufgebrachten magnetisierbaren Schicht auf der Basis von in einem Polymerbindemittel, Gleitmittel und weiteren Zusatzstoffen feinverteilten magnetischen Material, welche sich durch verminderte Reibungskoeffizienten verbessertes magnetisches Abriebverhalten im Feuchtklima und hohe Pegelstabilität auszeichnen.

Bei der Aufnahme und Wiedergabe von Signalen mittels magnetischer Aufzeichnungsträger, welche im Kontakt über den Magnetkopf geführt werden und zudem noch über Umlenkrollen, -bolzen oder andere Führungselemente bewegt werden, treten je nach Ausbildung der Schicht unter Umständen sehr hohe Reibungskräfte und häufig auch das sogenannte Rückgleiten bzw. der Stick-Slip-Effekt auf. Außerdem stellt der Abrieb bei der Benutzung solcher Aufzeichnungsträger nicht nur hinsichtlich der Lebensdauer sondern auch bezüglich der Betriebssicherheit ein Problem dar. Es ist daher üblich, den Schichtzusammensetzungen von magnetischen Aufzeichnungsträgern Gleitmittel zuzusetzen. Als geeignete Gleitmittel sind beispielsweise Polydimethylsiloxane, Paraffinöle, Wachse, gesättigte und ungesättigte Fettsäuren, Fettsäureester, Fettsäureamide, Salze von Fettsäuren, sowie feste Schmierstoffe, wie Molybdänsulfid, Graphit, Polytetraethylenpulver und Polytrichlorfluorethylenpulver bereits beschrieben. Auch wird angegeben, daß flüssige bzw. pastenförmige Gleitmittel gegenüber den festen Gleitmitteln den Vorteil besitzen, die zu schmierende Oberflächen mit einem homogenen dünnen Oberflächenfilm zu bedecken, wobei die mengenmäßige Zugabe an Gleitmittel sehr gering gehalten werden muß, da sonst die Oberfläche leicht klebrig wird. Diese Gleitmittel können jedoch häufig nicht als alleiniges Gleitmittel verwendet werden und werden deshalb mit festen oder pastenförmigen Gleitmitteln kombiniert. Bei Verwendung der vorgenannten Gleitmittel lassen sich bei vielen Anwendungsgebieten, insbesondere bei längerer Benetzungsdauer und ungünstigen Klimabedingungen weder das Sticken noch das Blocken und Verkleben der Bänder dauerhaft vermeiden. Auch läßt sich nicht verhindern, daß nach bereits kurzer Zeit die Bänder starke Abriebspuren zeigen, so daß die Wiedergabequalität besonders unter extremen Bedingungen merklich abnimmt.

Neben den genannten Schmiermitteln wurden auch solche aus tierischen und pflanzlichen Kohlenwasserstoffen vorgeschlagen. Die US-PS 3 144 352 beschreibt die Verwendung von Paraffinwachsen und in der US-PS 3 029 157 sind tierische und pflanzliche Fette als Schmiermittel bei Magnetogrammträgern eingesetzt. Aus der US-PS 3 492 235 ist es ferner bereits bekannt, Mischungen von Kohlenwasserstoffen und Estern als Schmiermittel in Magnetaufzeichnungsträgern zu verwenden. Die Zugabe von Estern von Fettsäuren und Monoalkoholen als Schmiermittel in Magnetaufzeichnungsträger, insbesondere Magnetbändern für die Aufzeichnung von Bildern, ist in der US-PS 3 274 111 offenbart. Dabei treten jedoch häufig Schwierigkeiten auf, die mit dem Ausschwitzen des Schmiermittels zusammenhängen. Diese Erscheinung des Ausschwitzens beruht darauf, daß viele handelsübliche Ester oder für die Herstellung dieser Ester verwendete Fettsäuren Mischungen von verschiedenen voneinander nur schwer zu trennenden Homologen darstellen, von denen einige bei der Verwendungstemperatur flüssig und andere fest sind.

In der DE-AS 22 50 382 wird die Gleitmittelkombination von Aminen mit Acrylsulfonsäuren, insbesondere die Kombination von Triethanolamindioleat mit Dodecylbenzolsulfonsäure beschrieben. Außerdem werden hierbei zusätzlich Weichmacher, die auch als Gleitmittel bekannt sind, zugesetzt. In der DE-OS 34 38 092 wird die Verwendung von Triethanolamindioleat in Kombination mit einem Dispergiermittel auf Acrylatbasis offenbart. Der Einsatz der Stearinsäure als Gleitmittel, allein oder auch in Kombination mit anderen, Schmierwirkung aufweisenden Stoffen bei der Herstellung von magnetischen Aufzeichnungsträgern ist ebenfalls bekannt. Ebenso bekannt ist die Zugabe von Zinkstearat, insbesondere bei Chromdioxid-enthaltenden magnetischen Aufzeichnungsträgern.

Die genannten Gleitmittel weisen jedoch meist den Nachteil auf, daß sie leicht aus der Magnetschicht ausschwitzen und bei extremen klimatischen Bedingungen zu Störungen beim Dauerbetrieb führen. Dadurch kommt es zu Ablagerungen an allen bandberührenden Teilen, besonders am Magnetkopf, wodurch Drop-outs und Pegeleinbrüche auftreten.

Zu besonders starken Belastungen der magnetischen Aufzeichnungsträger kommt es unter tropischen Klimabedingungen mit Temperaturen von 35 bis 50°C, bei 90 % bis 95 % relativer Luftfeuchtigkeit. Aber auch niedrige Temperaturen, etwa 5°C, verbunden mit hoher Luftfeuchtigkeit können zu Störungen führen. Vor allem Temperaturwechsel, verbunden mit extrem hoher Luftfeuchte stellen hohe Anforderungen an die Qualität einer Magnetschicht.

Der Erfindung lag damit die Aufgabe zugrunde, magnetische Aufzeichnungsträger bereitzustellen, die bei wechselnden Umgebungstemperaturen, begleitet mit hoher relativer Luftfeuchte, sehr gutes Abriebverhalten aufweisen, so daß die Betriebssicherheit dieser Aufzeichnungsträger unter Beibehaltung der günstigen magnetischen Kenndaten, glatter Bandoberfläche und somit guten Aufzeichnungs- und Wiedergabeeigenschaften auch unter besonders schweren klimatischen Bedingungen gewährleistet wird. imatischen Bedingungen gewährleistet wird.

Es wurde nun überraschenderweise gefunden, daß magnetische Aufzeichnungsträger, bestehend aus einem nichtmagnetischen Trägermaterial und mindestens einer darauf aufgebrachten magnetisierbaren Schicht auf der Basis von in einem Polymerbindemittel, einem Gleitmittel und weiteren üblichen Zusatzstoffen feinverteilten magnetischen Material, die geforderten Eigenschaften aufweisen, wenn als weiterer Zusatzstoff das Barium- und/oder Calciumsalz einer einbasischen Carbonsäure mit 12 bis 25 Kohlenstoffatomen in einer Menge von 0,2 bis 4 Gew.%, bezogen auf die Menge an magnetischem Material, zugesetzt wird. In einer besonderen Ausgestaltung enthält der magnetische Aufzeichnungsträger 1 bis 2 Gew.% dieses Zusatzstoffes in der Magnetschicht.

Geeignete Zusatzstoffe sind die Barium- und/oder Calciumsalze der Stearinsäure, Ölsäure, Palmitinsäure, Myristinsäure sowie die weiteren höheren Fettsäuren, wobei sich das Barium- oder Calciumsalz der Stearinsäure besonders bewährt hat.

Im Rahmen der Erfindung hat es sich als besonders zweckmäßig herausgestellt, das Ca- oder Ba-Salz der langkettigen Carbonsäure zusammen mit dem magnetischen Material und den übrigen Komponenten zu dispergieren. Es ist aber auch möglich, das entsprechende Ca- bzw. Ba-Salz der in Form einer getrennt hergestellten Paste der Magnetdispersion zuzufügen. Mit gleichem Vorteil kann auch ein Gemisch der oben genannten Salze zugefügt werden.

Als magnetisches Material wird bevorzugt feinteiliges stäbchenförmiges Gamma-Eisen(III)oxid mit einer durchschnittlichen Teilchengröße von 0,2 bis 2 µm und insbesondere von 0,1 bis 0,9 µm verwendet. Weitere geeignete magnetische Materialien sind Gamma-Eisen-(III)oxid mit Dotieren von Schwermetallen, insbesondere von Kobalt.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, ein Polyvinylformal, ein Polyurethanelastomeres, Mischungen von Polyisocyanaten und höhermolekularen Polyhydroxylverbindungen oder Vinylchloridpolymerisate mit über 60 % an Vinylchlorid-Molekülbausteinen, z.B. ein Vinylchloridcopolymerisat mit einem oder mehreren Comonomeren, wie ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomeren oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von einem oder mehreren Polyurethanelastomeren mit Polyvinylformalen, Phenoxyharzen und PVC-Copolymerisaten der oben angegebenen Zusammensetzung. Als Polyurethanelastomer-Binder werden handelsübliche elastomere Polyesterurethane aus Adipinsäure, 1,4-Butandiol und 4,4′-Diisocyanatodiphenylmethan bevorzugt angewandt.

Ebenfalls vorteilhaft sind OH-gruppenhaltige Polyharnstoffurethanbindemittel, die mit Polyisocyanat vernetzt werden und wobei das OH-gruppenhaltige Polyharnstoffurethan durch Umsetzung eines Polydiols, eines Diols und eines primären oder sekundären Aminalkohols und gegebenenfalls eines Triols mit einem Diisocyanat erhalten wird.

Den Dispersionen können weitere bekannte Zusatzstoffe zur Verbesserung der Magnetschicht, beispielsweise geringe Monocarbonsäureanteile, Gemische oder Ester derselben sowie Füllstoffe, wie Ruß, Graphit, Quarzmehl und/oder nicht magnetisierbares Pulver auf Silicatbasis und Mittel zur Verbesserung des Verlaufs, wie geringen Mengen Siliconöl, zugesetzt werden. Diese Zusätze sollen zweckmäßigerweise insgesamt 12 Gewichtsprozent, bevorzugt 8 Gewichtsprozent, bezogen auf das Trockengewicht der Magnetschicht, nicht überschreiten.

Die Herstellung der Magnetschichten erfolgt in bekannter Weise. Hierzu wird das magnetische Material mit dem verwendeten Bindemittel, dem Dispergierhilfsmittel und ausreichend Lösungsmittel in einer Dispergiermaschine, z.B. einer Topfkugelmühle oder einer Rührwerkskugelmühle gegebenenfalls mit weiteren Zusatzstoffe dispergiert. Zur Einstellung des zweckmäßigen Bindemittel-Pigment-Verhältnisses können diese der Mischung entweder in festem Zustand oder in Form von 10- bis 60 %igen Lösungen bzw. 30- bis 60 %igen Dispersionen zugegeben werden. Es hat sich als zweckmäßig erwiesen, die Dispergierung solange fortzuführen, bis eine extreme feine Verteilung des magnetischen Materials erreicht ist, was 1 bis 7 Tage erfordern kann. Durch anschließendes wiederholtes Filtrieren erhält man eine völlig homogene Magnetdispersion.

Die Magnetdispersion wird nun mit Hilfe üblicher Beschichtungsmaschinen, z.B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 µm und insbesondere von 6 bis 36 µm. Bevor die noch flüssige Beschichtungsmischung auf dem Träger getrocknet wird, was zweckmäßigerweise bei Temperaturen von 50 bis 90°C während 2 bis 5 Minuten geschieht, werden anisotrope Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Temperaturen von 50 bis 100°C, vorzugsweise 60 bis 80°C, geglättet und verdichtet werden. Die Dicke der Magnetschicht beträgt im allgemeinen 1 bis 20 µm, vorzugsweise 2 bis 10 µm.

Die erfindungsgemäßen magnetischen Aufzeichnungsträger zeichnen sich gegenüber solchen nach dem Stand der Technik durch eine deutliche Überlegenheit hinsichtlich ihrer Lebensdauer unter extremen klimatischen Bedingungen aus. Außerdem sind die mechanischen Kenndaten, die Reibungswerte sowie die Eigenschaften bei Normalklima besonders günstig, wobei die magnetischen Eigenschaften, insbesondere die für die elektroakustischen Daten wichtigen Werte, wie Richtfaktor und remanente Magnetisierung, noch zusätzlich verbessert sind.

Die Erfindung wird anhand der folgenden Beispiele im Vergleich zu Versuchen nach dem Stand der Technik näher erläutert. Die in den Beispielen und Vergleichsversuchen genannten Teile und Prozente beziehen sich, soweit nicht anderes angegeben ist, auf das Gewicht.

Beispiel 1

In einer Stahlkugelmühle mit 6 l Rauminhalt, gefüllt mit 8 kg Stahlkugeln eines Durchmessers von 4 bis 6 mm, wurden 900 g eines aus $\alpha$-FeOOH hergestellten $\gamma$-$Fe_2O_3$ mit einer Koerzitivfeldstärke von 30 kA/m und einer spezifischen Oberfläche von 24 m²/g, 41 g eines aus Oxoalkoholen ($C_{13}$-bis $C_{16}$-Fraktion), Ethylenoxid, Propylenoxid und Polyphosphorsäure hergestellten Dispergiermittels und 18 g Calciumstearat zusammen mit 850 g eines Lösungsmittelgemisches aus gleichen Teilen Tetrahydrofuran und Dioxan, 276,9 g einer 13 %igen Lösung eines Polyesterpolyurethans vom K-Wert 60 (1 %ig in DMF), hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in oben genanntem Lösungsmittelgemisch und 120,1 g einer 20 %igen Lösung eines Copolymers aus Vinylchlorid, Dimethylmaleinat und Diethylmaleinat im Verhältnis 80/10/10 und einem K-Wert von 60 in oben genanntem Lösungsmittelgemisch eingefüllt und 90 Stunden lang dispergiert. Dann wurden in der Nachphase 572 g Polyurethanlösung, 250 g Copolymerlösung, 0,9 g Siliconöl, 0,9 g Hydrochinon, 1,8 g n-Butylstearat und 9 g Isostearinsäure zugegeben. Nach 2 weiteren Stunden Dispergierzeit wurde die Dispersion aus der Mühle entnommen und unter Druck durch einen Filter mit 5 µm Poren filtriert. Nach der Filtration wurden unter kräftigem Rühren pro kg Dispersion 6,7 g einer 75 %igen Lösung eines Triisocyanats aus 3 Mol Toluylidendiisocyanat und 1 Mol Trimethylolpropan in Ethylacetat zugegeben. Unmittelbar danach wurde die Dispersion auf eine 12 µm dicke Polyethylenterephthalatfolie mittels eines üblichen Linealgießers aufgetragen. Die beschichtete Folie wurde nach Durchlaufen eines Magnetfeldes zum Ausrichten der Magnetteilchen bei Temperaturen zwischen 50 und 90°C getrocknet. Nach der Trocknung wurde die Magnetschicht durch Hindurchziehen zwischen auf 70°C beheizten Walzen unter einem Liniendruck von 300 kp/cm verdichtet und geglättet, so daß die Dicke der Magnetschicht 4,5 µm betrug und dann in 3,81 mm breite Bänder für Audioanwendung geschnitten.

Die Rauhigkeit $R_z$ der Magnetschicht wurde mit einem Perthometer der Fa. Perthen, Hannover gemessen. Die Messung der magnetischen Eigenschaften wurde in einem Meßfeld von 100 kA/m durchgeführt. Die elektroakustischen Werte wurden gemäß DIN 45 401, DIN 45 403 und DIN 45 512 Bl. 12 gegen das Bezugsband IEC I durchgeführt.

Die mechanischen Bandeigenschaften wurden nach folgenden Tests geprüft:

Reibungskoeffizient Schicht/Stahl:

Die Bestimmung der Reibungszahlen erfolgt nach DIN 45 522, Blatt 1.

Quasistatische Reibung:

Die Reibungszahl wird durch Messen einer Zugkraft bestimmt, die ein über eine feststehende Meßtrommel geführtes Magnetband durch Reibung erzeugt. Die Meßtrommel ist eine Stahltrommel mit einer Oberflächenrauhigkeit von ca. 0,15 µm und einem Durchmesser von 70 mm. Das Bandstück ist 25 cm lang und wird bei einem Bandzug von 20 cN mit einer Geschwindigkeit von 1 mm/sec und einem Unschlingungswinkel von 180° über die Trommel geführt. Der Zug an der Meßdose F ist ein Maß für die Reibungszahl $\mu$ und zwar nach

$$\mu = \frac{1}{\pi} \cdot \ln \frac{F}{20}$$

Abriebverhalten am Recorder:

Die Zahl der Durchläufe am Recorder Typ Kennwood-Trio bis zum Pegelabfall > 2 dB wird als Lebensdauer angegeben; der dabei entstandene Abrieb am Löschkopf, Tonkopf und an der Tonwelle wird mittels Klebebandes abgezogen und nach einer Benotungsskala mit Zahlen von 1 (kein Abrieb) bis 6 (sehr starker Abrieb) benotet.

<u>Wechselklimatest:</u>

Auf einem Recorder werden mit den jeweiligen Prüfbändern gefüllte Compact-Cassetten abwechselnd bei 35°C, 90 % relative Luftfeuchte und 5°C, 80 % relative Luftfeuchte jeweils 5 Stunden lang betrieben. Dieses Zyklus wurde 4 x wiederholt. Die Recorder waren dabei mit Hartpermalloyköpfen versehen. Die Beurteilung der Lebensdauer geschieht durch die Ausfallzeiten, die in Prozent der vorgeschriebenen Prüfzeit angegeben wurden. Als Ausfall wurde ein Pegelabfall $\geq$ 6 dB länger als 5 sec definiert.

<u>Blockiertest nach Feuchtklimalagerung:</u>

Die in Compact-Cassetten gefüllten Prüfbänder wurden 3 Tage bei 40°C und 93 % relative Luftfeuchte gelagert. Unmittelbar nach dieser Feuchtklimalagerung wurden sie bei Raumklima auf einem Recorder vom Typ Philips EL 3302A geprüft. Beurteilt wurde das Laufverhalten der Bänder bzw. der Abrieb nach einmaligem Durchlauf. Nach 24 Stunden Akklimatisierungszeit im Raumklima wurden sie erneut am gleichen Recorder geprüft.
Bewertung der Prüfergebnisse:
- Blocken am Recorder sowohl unmittelbar nach Feuchtklimalagerung als auch nach 24 Stunden Akklimatisierung im Raumklima: sehr schlecht.
- Blocken am Recorder unmittelbar nach Feuchtklimalagerung, nach 24 Stunden Akklimatisierung im Raumklima kein Blocken mehr, jedoch starker Abrieb: schlecht.
- Blocken am Recorder unmittelbar nach Feuchtklimalagerung, nach 24 Stunden Akklimatisierung im Raumklima problemloser Durchlauf ohne Abrieb: zufriedenstellend.
- Problemloser Durchlauf ohne Abrieb bereits unmittelbar nach Feuchtklimalagerung: sehr gut.
Die Prüfergebnisse sind in der Tabelle 1 angegeben.

<u>Beispiel 2</u>

Es wurde wie im Beispiel 1 beschrieben verfahren, jedoch wurde anstelle von Calciumstearat Bariumstearat verwendet. Die Prüfergebnisse sind in der Tabelle angegeben.

<u>Vergleichsversuch 1</u>

Es wurde wie in Beispiel 1 beschrieben verfahren, jedoch ohne Zusatz von Calciumstearat und Bariumstearat. Die Prüfergebnisse sind in der Tabelle angegeben.

<u>Vergleichsversuch 2</u>

Es wurde wie in Beispiel 1 beschrieben verfahren, jedoch wurde anstelle von Calciumstearat die gleiche Menge Zinkstearat eingesetzt. Die Prüfergebnisse sind in der Tabelle angegeben.

<u>Vergleichsversuch 3</u>

Es wurde wie in Beispiel 1 beschrieben verfahren, jedoch wurde anstelle von Calciumstearat die entsprechende Menge Stearinsäure verwendet. Die Prüfergebnisse sind in der Tabelle angegeben.

Tabelle

| | Beispiel 1 | Beispiel 2 | Vergleichsversuch 1 | 2 | 3 |
|---|---|---|---|---|---|
| Unsatiniert: | | | | | |
| Rauhigkeit Rz (μm) | 0,36 | 0,37 | 0,38 | 0,48 | 0,75 |
| Satiniert:* | | | | | |
| Koerzitivfeldstärke (kA/m) | 29,8 | 29,7 | 30,1 | 30,0 | 29,6 |
| remanente Magnetisierung (mT) | 160 | 159 | 153 | 154 | 156 |
| relative Remanenz | 0,84 | 0,84 | 0,83 | 0,83 | 0,83 |
| Richtfaktor | 2,3 | 2,3 | 2,1 | 2,1 | 2,1 |
| SFD (Schaltfeldverteilung) | 0,26 | 0,26 | 0,27 | 0,27 | 0,27 |
| Elektroakustische Daten gegen Bezugsband IEC I: | | | | | |
| Empfindlichkeit 315 Hz (dB) | 0 | 0,1 | −0,5 | −0,4 | −0,5 |
| Empfindlichkeit 10 kHz (dB) | 1,5 | 1,6 | 1,3 | 1,3 | 1,0 |
| Aussteuerbarkeit 315 Hz (dB) | 0 | 0,2 | −0,5 | −0,6 | −0,5 |
| Austeuerbarkeit 10 kHz (dB) | 2,0 | 2,2 | 1,7 | 1,8 | 1,2 |
| Mechanische Eigenschaften: | | | | | |
| Reibungskoeffizient Schicht/Stahl | 0,30 | 0,30 | 0,33 | 0,32 | 0,32 |
| quasistatische Reibung | 0,19 | 0,20 | 0,22 | 0,22 | 0,23 |
| Abriebverhalten am Recorder: | | | | | |
| Lebensdauer Durchläufe | >100 | >100 | >100 | 80 | 35 |
| Ablagerungen Löschkopf | 2,5 | 2 | 3 | 2 | 3 |
| Ablagerungen Tonkopf | 2,5 | 2,5 | 2 | 3,5 | 4 |
| Ablagerungen Tonwelle | 1 | 1 | 1 | 1 | 1 |
| Wechselklimatest: | | | | | |
| Ausfallzeit in % | 0 | 0 | 75 | 68 | 90 |
| Blockiertest: | | | | | |
| unmittelbar Blockierer | 0 | 0 | 100% | 100% | 100% |
| unmittelbar Abrieb | kein | kein | | | |
| akklimatisiert Blockierer | 0 | 0 | 50% | 30% | 40% |
| akklimatisiert Abrieb | kein | kein | stark | stark | stark |

* Magnetschichtdicke 4,5 μm

## Patentansprüche

1. Magnetische Aufzeichnungsträger, bestehend aus einem nichtmagnetischen Trägermaterial und mindestens einer darauf haftfest aufgebrachten magnetisierbaren Schicht auf der Basis von in einem Polymerbindemittel, Gleitmittel und weiteren üblichen Zusatzstoffen feinverteilten magnetischen Material, dadurch gekennzeichnet, daß als weiterer Zusatzstoff das Barium- und/oder Calciumsalz einer einbasischen Carbonsäure mit 12 bis 25 Kohlenstoffatomen in einer Menge von 0,2 bis 4 Gew.%, bezogen auf die Menge an magnetischem Material, zugesetzt wird.

2. Magnetischer Aufzeichnungsträger gemäß Anspruch 1, dadurch gekennzeichnet, daß das Barium- und/oder Calciumsalz der Stearinsäure zugesetzt wird.

## Claims

1. A magnetic recording medium, consisting of a non-magnetic base and, firmly bonded to this, one or more magnetizable layers based on magnetic material finely dispersed in a polymer binder, a lubricant and other conventional additives, wherein the barium and/or calcium salt of a monobasic carboxylic acid of 12 to 25 carbon atoms is added in an amount of from 0.2 to 4% by weight, based on the amount of magnectic material, as a further additive.

EP 0 243 836 B1

2. A magnetic recording medium as claimed in claim 1, wherein the barium and/or calcium of salt stearic acid is used.

**Revendications**

1. Support d'enregistrement magnétique, constitué d'un matériau-support non magnétique et d'au moins une couche magnétisable appliquée sur lui, fixée par adhérence, à base d'un matériau magnétique finement réparti dans un liant de polymère, un lubrifiant et autres additifs usuels, caractérisé par le fait que l'on ajoute, comme autre additif, le sel de baryum et/ou de calcium d'un acide carboxylique monoacide, à 12 à 25 atomes de carbone, en proportion de 0,2 à 4% en poids, par rapport à la quantité de matériau magnétique.

2. Support d'enregistrement magnétique selon la revendication 1, caractérisé par le fait que l'on ajoute le sel de baryum et/ou de calcium de l'acide stéarique.